# EUROPEAN PATENT APPLICATION

(11) **EP 1 249 780 A2**
(43) Date of publication of application: **16.10.2002**
(21) Application number: 02005471.4
(22) Date of filing: 09.03.2002
(51) Int. Cl.: G06F 17/60

(54) **Online order-placement and reception processing method and system**

(30) Priority: 12.03.2001 JP 2001068441
(71) Applicant: KABUSHIKI KAISHA JUKEN SANGYO, Hiroshima, 738-8502 (JP)
(72) Inventor: Nakamoto, Yusho, Hatsukaichi-shi, Hiroshima, 738-0054 (JP); Muneishi, Tomio, Hiroshima-shi, Hiroshima, 731-5106 (JP); Teraoka, Takamichi, Hiroshima-shi, Hiroshima, 733-0871 (JP); Kanbara, Takashi, Hatsukaichi-shi, Hiroshima, 738-0017 (JP)
(74) Representative: Reichel, Wolfgang, Dipl.-Ing.

(57) **Abstract**

A host computer stores stocked-product data and estimation data in an order placement and reception information database. In response to an inquiry request from the terminal, the host computer permits a terminal to refer to the stocked-product data and estimation data of parties relating to a relevant product distribution channel. The terminal refers to the data, creates estimation data, and transmits the estimation data to the host computer. The host computer stores the received estimation data in the order placement and reception information database as order placement data, and performs delivery management on the basis of the order placement data.

## Description

### BACKGROUND OF THE INVENTION

### 1. Field of the Invention

The present invention relates to a method and system for online order-placement and reception processing, and more particularly, to a method and system for online order-placement and reception processing which enables efficient on-line performance, in an integrated manner, of various tasks, including placement of an order, preparation of an estimation sheet, and delivery, which are performed in relation to transactions conducted between, for example, an architectural material manufacturer and customers.

### 2. Description of the Related Art

An architectural material manufacturer conducts transactions every day with a large number of customers, including distributors such as wholesalers and builders such as builders. Since customers order architectural materials in different combinations and under different conditions in terms of types and sizes of the architectural materials, delivery date, and delivery site, filling out an order form has been complicated and cumbersome for the customer, and making an estimation sheet has been complicated and cumbersome for the architectural material manufacturer. For example, a customer must check the types, sizes, and installation methods of all necessary architectural materials, and place an order, while designating a size, number of pieces, installation method, delivery date, and delivery site for each type. Upon reception of the order, the architectural material manufacturer must secure the necessary numbers of architectural materials of the types designated by the customer; and if necessary, the architectural material manufacturer must cut the architectural materials to designated sizes. Subsequently, the architectural material manufacturer must deliver the architectural materials to a designated construction site on a designated date. Therefore, the architectural material manufacturer must estimate or determine cost, the number of working days, and delivery method in consideration of all the above factors.

Although an order placement and reception system which enables online ordering of architectural materials has been used, the system can handle order placement only. Therefore, a customer who wishes to place an order first checks the details of a product (architectural material) with reference to a product catalogue, and picks out an execution drawing from a collection of execution drawings before preparation of order placement data. That is, tasks are not integrated. The thus-created order placement data are transmitted online to the architectural material manufacturer; and the architectural material manufacturer prepares an estimation sheet on the basis of the order placement data and provides the estimate sheet to the product distribution channel of the customer; i.e., a distributor or builder. Subsequently, the distributor or builder places an order on the basis of the estimation sheet. Therefore, problems in relation to delivery have often occurred due to lack of communications between the customer and the manufacturer.

In the conventional on-line order placement and reception system for architectural materials, processing has been limited to substantially only order processing, and use of information has been insufficient, resulting in the following problems.
(1) In many cases, after a customer inputs order placement data by use of an online terminal and transmits the data to an architectural material manufacturer, the customer must wait for a relatively long time before receiving an estimation sheet, resulting in a delay in placing an order after confirmation of the estimation sheet.
(2) Since information is not shared among customers, a customer must newly create order placement data for each order, even in the case where a similar transaction has been carried out in the past between the architectural material manufacturer and another customer. Further, the architectural material manufacturer must create estimation sheets of the same contents repeatedly. Therefore, the conventional system has been inefficient.
(3) When the architectural material manufacturer receives an order for a large number of products by means of a single order voucher, a delivery date is determined in accordance with the delivery date of the product which has the latest delivery date among the products listed on the order form. Therefore, when the customer wishes products that are in stock to be delivered before delivery of other products, the customer must make and send an order voucher for each product, or call the architectural material manufacturer in order to request that products be divided into a plurality of groups according to their delivery dates. In this case, the architectural material manufacturer must correct vouchers kept at the manufacturer. Therefore, the benefit of online order reception decreases greatly.
(4) The most important factor in sales of architectural materials is just-in-time delivery of products to a construction site where conditions constantly change. Therefore, a salesperson at a retail shop must create an administration table for each construction site of a builder, who is a customer of the shop; write in the table a date of delivery from a manufacture or wholesaler and a scheduled date of delivery to the construction site for each item (flooring material, fittings, or the like); and perform complicated administrative work.
(5) Since the sizes of window frames vary depending on the sizes of sashes to be used; i.e., depending on the manufacturer of the sashes, conventionally, uncut long products have been delivered to a construction site and machined on-site. In recent years, in order to satisfy demands for shortened construction period, reduced cost, and easier waste disposal, some products of sash frames have been delivered in pre-cut form (window frames cut to predetermined dimensions). However, this does not satisfactorily meet needs of customers who wish to determine the dimensions of window frames freely.
(6) In many cases, a counter is manufactured in accordance with special specifications designating shape, size, etc. Therefore, there has been employed a scheme which enables an architectural material manufacturer to machine an architectural material in accordance with the customer's demands and deliver it to the customer. Under this scheme, a customer writes necessary items in an order form designated by the manufacturer to thereby prepare an order form and sends the order form by means of facsimile transmission. However, the order form is fax-transmitted repeatedly from a builder to a retail shop, from the retail shop to a wholesaler, etc. Therefore, this scheme has involved problems attributable to order placement by means of facsimile transmission; e.g., the order form gradually becomes difficult to read, and orders that have been placed are left unfilled.

### SUMMARY OF THE INVENTION

An object of the present invention is to provide an online order placement and reception system which enables a customer to make an estimation with a reduced workload, which shortens the period from estimation to delivery, which can cope with customers' various needs such as special order and rush order, and which enables efficient performance of delivery management without causing errors.

In order to achieve the above object, the present invention enables a customer to directly create estimation data on line. For this purpose, an input pattern (template) is displayed on the screen of, for example, a terminal, which enables a customer to complete estimation data through a simple operation of inputting necessary items in a predetermined sequence and to place an order immediately. Moreover, on the basis of items which the user has input for estimation from the terminal, a host computer calculates a delivery date and an estimated price and sends them to the customer's terminal in real time. Thus, the customer can obtain accurate information and create estimation data more quickly. Since each customer creates estimation data, many tasks which have conventionally performed at intermediate stages can be eliminated. In addition, unlike the case of conventional system, the customer is not required to wait for a long period of time before obtaining delivery date and estimated price. Thus, efficiency is improved.

In order to enable the above-described operation, estimation data and order placement data are stored in a database together with product information; and each customer has open access to not only the product information, but also estimation data created in a product distribution channel relating to the customer, to thereby enable the customer to easily create estimation data and order placement data with reference to the opened data. Further, the estimation data and the order placement data created by the customer are managed on a customer-by-customer basis, on a delivery date-by-delivery date basis, or on a delivery area-by-delivery area basis. Moreover, delivery items and delivery schedules are managed for each customer, each execution method and each construction site. Thus, these data can be referred to and checked easily, so that mistake-free delivery can be realized.

The present invention provides the following method and system for online order-placement and reception processing.

A method to process an online order placement and reception in a system comprising a host computer receiving the order and a terminal placing the order, which are connected each other via a network, includes storing stocked-product data and estimation data in an order placement and reception information database provided in the host computer, referring from the terminal to the stocked-product data and the estimation data of parties relating to a relevant product distribution channel, being permitted by the host computer in response to an inquiry request from the terminal, creating in the terminal a new estimation data based on the data referred, and transmitting the new estimation data to the host computer and storing the received new estimation data in the order placement and reception information database as an order placement data, and performing delivery management on the basis of the order placement data.

Preferably, the host computer presents an estimation creation menu on a screen of the terminal; the terminal selects an arbitrary input template (pattern) from the presented estimation creation menu and successively inputs necessary data to thereby create estimation data in an interactive fashion.

Preferably, the estimation creation menu includes an input pattern for free-planning which enables the terminal to freely set finish dimensions and machining conditions.

Preferably, the host computer calculates a delivery date and estimated price on the basis of the estimation data input by the terminal and transmits the delivery date and estimated price to the terminal in real time.

Preferably, the order placement data stored in the order placement and reception information database are managed in such a manner that the order placement data can be referred to while being sorted for each customer's terminal, each delivery date, and each delivery area.

Preferably, on the basis of the order placement data stored in the order placement and reception information database, delivery items and delivery schedules are managed for each customer's terminal, each execution method and each construction site.

A system to process an online order placement and reception includes a host computer receiving the order, and a terminal placing the order being connected with the host computer via a network. The host computer includes an order placement and reception information database to store stocked-product data and estimation data, estimation order means for enabling, in response to an inquiry request from the terminal, a the terminal to refer to the stocked-product data and estimation data of parties relating to a relevant product distribution channel and assists the terminal to creates estimation data, and delivery management means for storing in the order placement and reception information database the estimation data created by the terminal and uses the estimation data as order placement data to manage delivery.

Preferably, the estimation order means of the host computer has a wizard function to present an estimation creation menu on a screen of the terminal, forcing the terminal to select an arbitrary input pattern from the presented estimation creation menu and successively input necessary data to thereby create estimation data.

Preferably, wherein the estimation creation menu includes an input pattern for free-planning which enables the terminal to freely set finish dimensions and machining conditions.

Preferably, the host computer calculates a delivery date and estimated price on the basis of the estimation data input by the terminal and transmits the delivery date and estimated price to the terminal in real time.

Preferably, the order placement data stored in the order placement and reception information database are managed in such a manner that the order placement data can be referred to while being sorted for each customer's terminal, each delivery date and each delivery area.

Preferably, wherein, on the basis of the order placement data stored in the order placement and reception information database, the delivery management means manages delivery items and delivery schedules for each customer's terminal, each execution method and each construction site.

### BRIEF DESCRIPTION OF THE DRAWINGS

FIG. 1 is a diagram showing the basic configuration of an online order placement and reception processing system according to the present invention.
FIG. 2 is a diagram showing the system configuration of a first embodiment of the online order placement and reception processing system according to the present invention.
FIG. 3 is a flowchart showing processing for selecting an alternative flooring material of different color.
FIG. 4 is a detailed flowchart showing processing for calculating a delivery date of an alternative product.
FIG. 5 is a flowchart showing processing for calculating a delivery date which can show specific arrival time.
FIG. 6 is a flowchart showing processing for setting and managing delivery items and delivery schedules on a customer-by-customer basis and on an execution method-by-execution method basis.
FIG. 7 is an explanatory view showing a menu screen.
FIG. 8 is an explanatory view showing a "List of Counter Shapes" screen for ordering a custom-made counter.
FIG. 9 is an explanatory view showing a "Selection of Material, Color, and Thickness" screen for ordering a custom-made counter.
FIG. 10 is an explanatory view showing a "Shape Designation" screen for ordering a custom-made counter.
FIG. 11 is an explanatory view showing a "Chamfer Shape Designation" screen for ordering a custom-made counter.
FIG. 12 is an explanatory view showing a "Shape Confirmation" screen for ordering a custom-made counter.
FIG. 13 is an explanatory view showing an "Order" screen for ordering a custom-made counter.

### DETAILED DESCRIPTION OF THE PREFERRED EMBODIMENTS

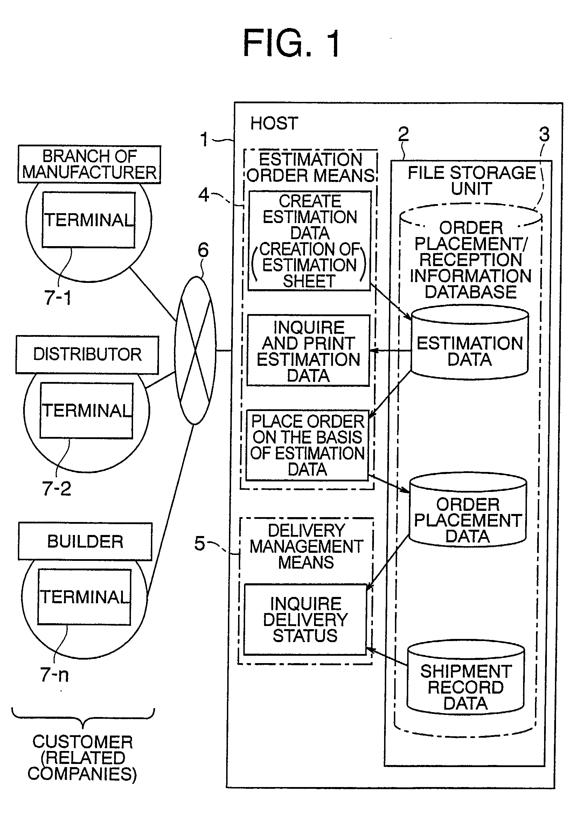

FIG. 1 shows the basic configuration of an online order placement and reception processing system according to the present invention.

As shown in FIG. 1, a host computer (or server) 1 disposed at an architectural material manufacturer includes an order placement and reception information database 3 stored in a file storage unit 2; and estimation order means 4 and delivery management means 5, which are realized by means of programs. The host computer 1 is connected to customer's terminals 7-1, 7-2. . . 7-n and is programmed in order to perform order placement and reception processing. The terminal 7-1 is installed at a branch of the architectural material manufacturer. The terminal 7-2 is installed at a distributor. The terminal 7-n is installed at a construction firm.

Stored in the order placement and reception information database 3 are inventory data regarding products such as architectural materials; and estimation data and order placement data created by respective customer's terminal 7 in the past.

In response to an inquiry request from the terminal 7-1, 7-2, or 7-n, the estimation order means 4 searches the order placement and reception information database 3 for the stocked-product data and estimation data produced in a relevant product distribution channel, and displays them on the corresponding terminal 7. While referring to the displayed stocked-product data and estimation data, the customer's terminal 7 creates estimation data and transmits the data to the host computer 1. The estimation order means 4 checks the estimation data received from the terminal 7 and stores the data in the order placement and reception information database 3. Upon receipt of an order placement instruction from the terminal 7, the estimation order means 4 performs processing for accepting the order and for storing estimation data in the order placement and reception information database 3 as order placement data.

The delivery management means 5 manages the order placement data stored in the order placement and reception information database 3 in such a manner that the order placement data can be referred to while being sorted for each customer's terminal 7, each delivery area and each delivery date. Moreover, delivery items (or the products) and delivery schedules contained in the order placement data are managed for each customer's terminal 7, each execution method and each construction site. In response to a delivery status inquiry, the delivery management means 5 compares the order placement data and shipment record data for showing status of shipment and replies to the inquiry.

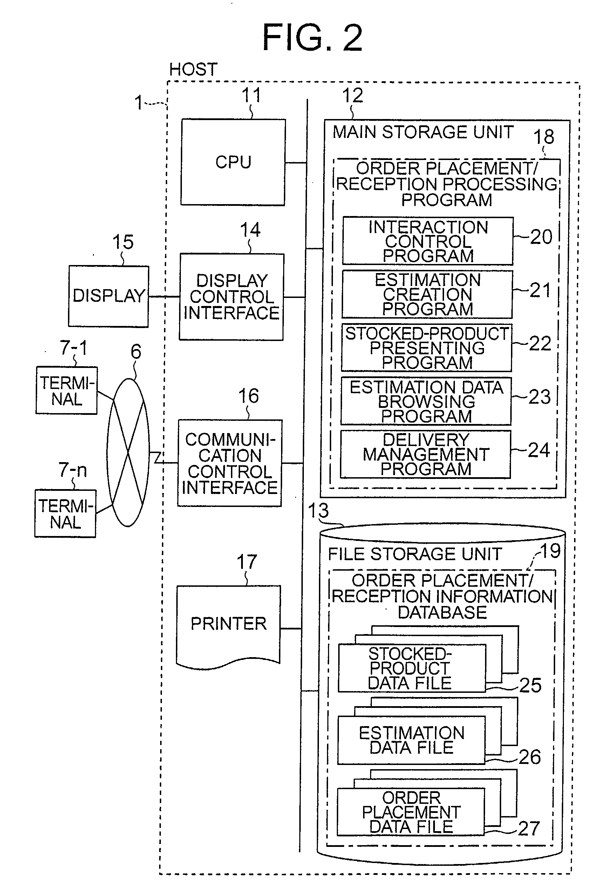

A preferred embodiment in which the online order placement and reception processing system according to the present invention is applied to transactions of architectural materials will be described with reference to FIGS. 2 to 13.

FIG. 2 shows the system configuration. Reference numeral 1 denotes a host computer; 6 denotes a network; 7-1 to 7-n denote customers' terminals; 11 denotes a CPU; 12 denotes a main storage unit such as SDRAM; 13 denotes a file storage unit such as HDD; 14 denotes a display control interface; 15 denotes a display; 16 denotes a communication control interface such as a modem or LAN; and 17 denotes a printer. The functions of the online order placement and reception processing system according to the present invention are realized by means of an order placement and reception processing program 18 and an order placement and reception information database 19.

The order placement and reception processing program 18 includes an interaction control program 20, an estimation creation program 21, a stocked-product presenting program 22, an estimation data browsing program 23, and a delivery management program 24. The order placement and reception information database 19 includes a stocked-product data file 25, an estimation data file 26, and an order placement data file 27.

Upon receipt of an command, such as a stocked-product inquiry request, an estimation-data browsing request, or an order placement request, from one of the terminals 7-1 to 7-n (customer's terminal 7), the interaction control program 20 cooperates with the programs 20 to 24 in order to perform corresponding processing.

The estimation creation program 21 can be executed from the terminals 7-1 to 7-n. The estimation creation program 21 assists online the customer's terminal 7 in creating estimation data by themselves. A plurality of patterns or templates for creation of estimation data are prepared in advance. According to customer's input, the customer's terminal 7 selects a pattern or template from those listed on a menu in accordance with a manner of ordering, such as selecting and designating a completed product, designating a pre-cut product by use of a sub-menu, or freely setting dimensions and cutting conditions by use of a free-planning menu. That is, data are input into each of input items (input field) provided in a pattern (or template). For example, a customer inputs, as estimation data, product name, number of pieces, price, delivery date, delivery site, and supplier (e.g., the name of a wholesaler). When the customer inputs a product name, the customer opens a pull-down menu and clicks one of products listed on the pull-down menu, directly inputs a code number (product number) allocated to the product, or inputs a corresponding bar code provided in a catalogue by use of a bar-code reader. As to numerical values, the customer inputs each numerical value by use of a keyboard or keypad, or opens a pull-down menu and clicks one of values listed on the pull-down menu. Dimensions and other data for estimation for free planning are also input by use of the keyboard or keypad. The estimation creation program 21 checks the thus-set values; adds other necessary items such as delivery method, delivery cost, and consumption tax; and calculates a delivery date to thereby complete estimation data. Subsequently, the estimation creation program 21 sends online the estimation data to the customer's terminal 7, which displays the data on its screen.

When the customer orders a custom-made window frame, the estimation creation program 21 enables the customer to select a "selecting-plan scheme" or a "free-planning scheme". For the selecting-plan scheme, a plan menu for "portion-by-portion order cut" enables a customer to select one of a plurality of plans at the time of order placement. The free-planning scheme enables the customer to place an order while setting finish dimensions and machining conditions.

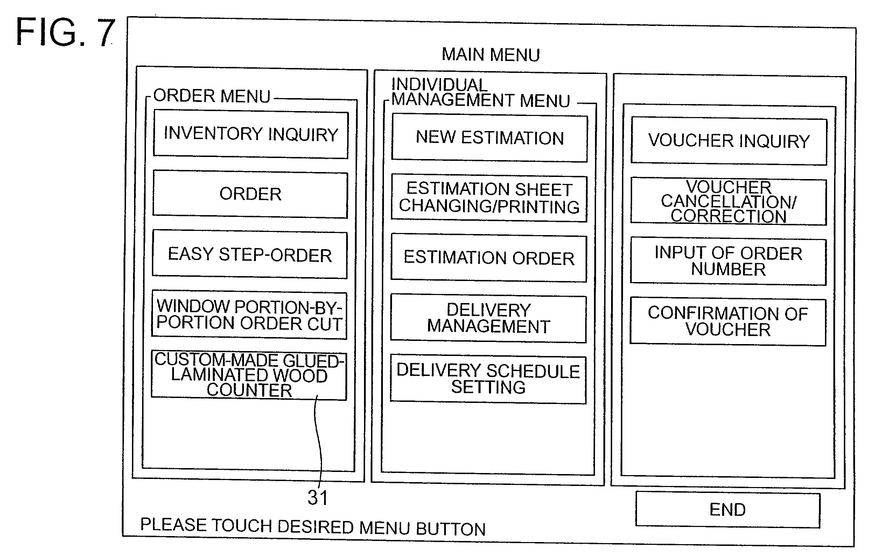

Moreover, the estimation creation program 21 provides a special estimation-creation wizard for placement of an order for a custom-made counter. The wizard screen for creating an estimation of a custom-made counter, along with a customer's example operation, will be described with reference to FIGS. 7 to 13.

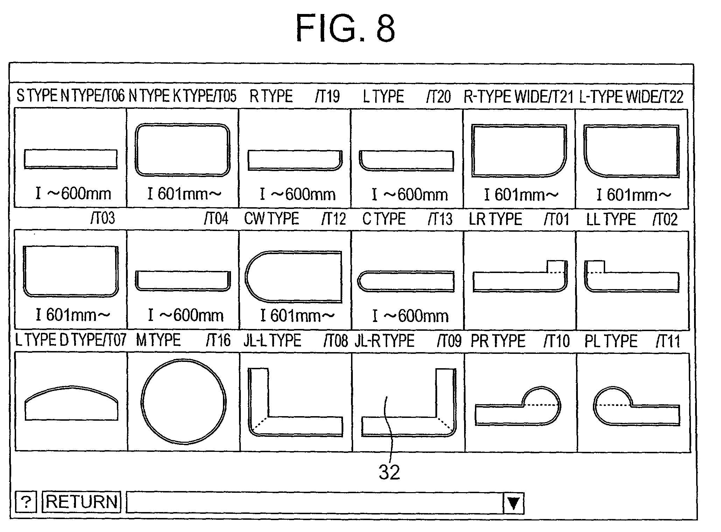

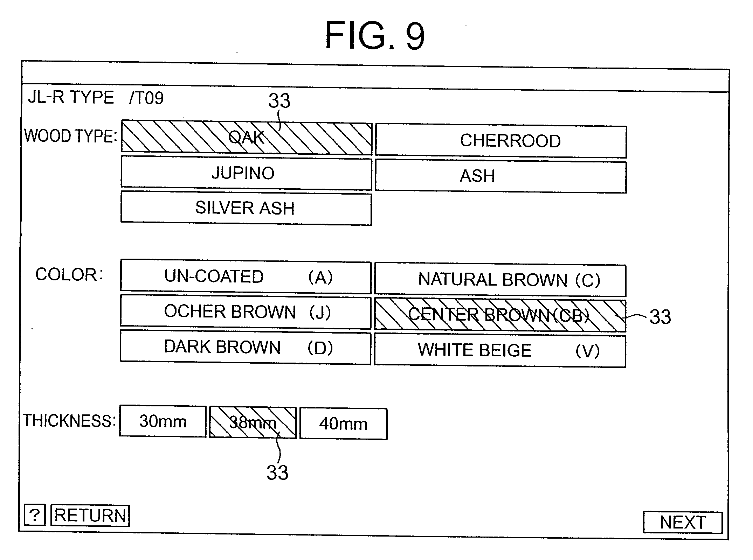

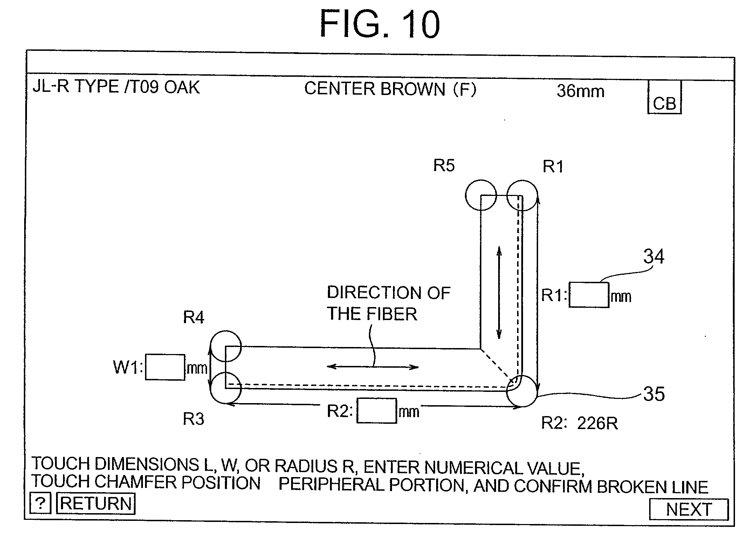

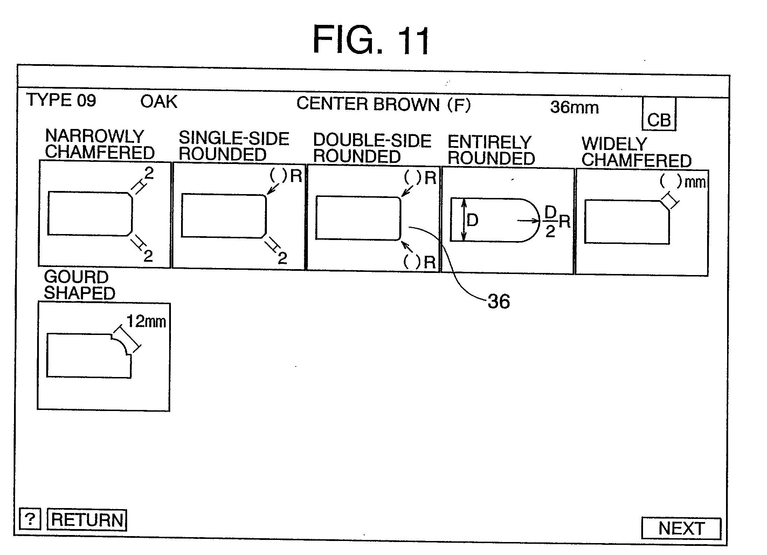

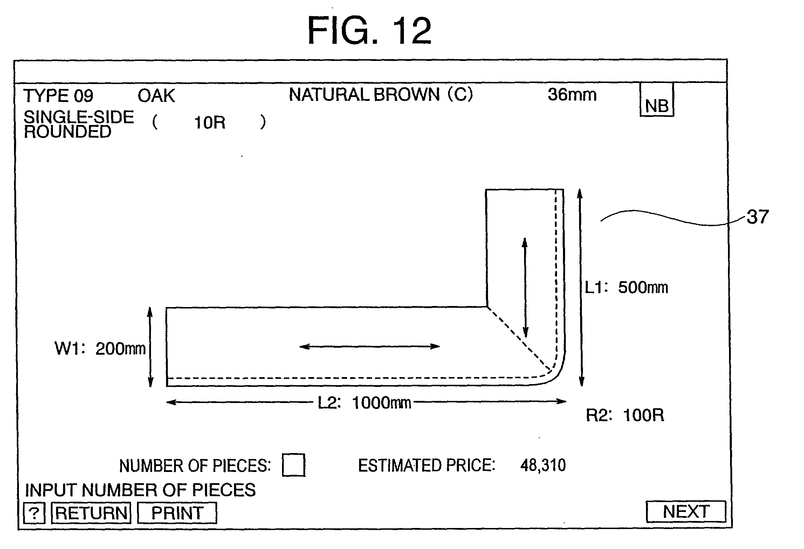

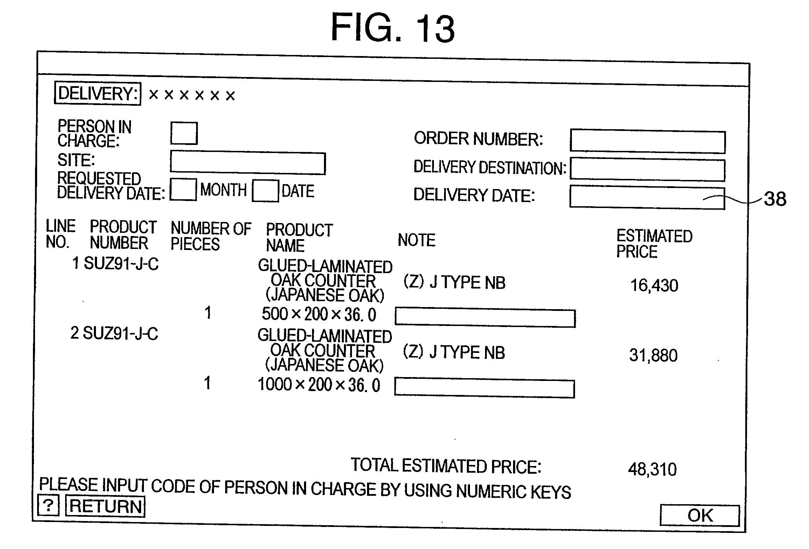

FIG. 7 shows a menu screen. The customer's terminal 7 displays a label "custom-made glued-laminated wood counter" 31 on this screen, and a customer touches (or clicks) it. In response thereto, a "Counter Shape List" screen shown in FIG. 8 is displayed on the terminal 7. The customer touches and selects a desired shape of a counter. Here, for example, the customer has selected a label 32 for type T09 (JL-R type). Next, the customer's terminal 7 proceeds to a screen for "Selection of Material, Color, and Thickness," as shown in Fig. 9. On this screen, desired material, color, and thickness of the counter are selected through touching a label 33 or the like. Here, for example, the customer has selected "Oak" for material, "CB center brown" for color, and "38 mm" for thickness. Subsequently, the customer's terminal 7 proceeds to a "Shape Designation" screen shown in FIG. 10. On this screen, dimensions (W, L) and a radius (R) are set in input fields 34 and 35, along with a chamfer position indicated by a broken line. Subsequently, the customer's terminal 7 proceeds to a "Chamfer Shape Designation" screen shown in FIG. 11. On this screen, a label for a desired chamfer cross section is touched so as to select a desired chamfer cross section. Here, for example, the customer has selected a "Both-side rounded" label 36. Next, a "Shape Confirmation" screen shown in FIG. 12 is displayed on the terminal 7. On this screen, the customer confirms values which have been selected or input thus far. Subsequently, the customer may touch a "Print" label to thereby print the values or touch a "Next" button so as to proceed to an "Order" screen shown in FIG. 13. On the "Order" screen of FIG. 13, customer's terminal 7 displays a product number of the designated counter, the number of pieces, a product name, and design specifications, an estimated price calculated by the estimation creation program 21. When the customer inputs a delivery place in a window labeled "Site" and a desired delivery date in a window labeled "Desired delivery date," the estimation creation program 21 determines a delivery destination and a delivery date and displays them in a display field 38 of the screen, such that the delivery destination is displayed in a window labeled "Delivery destination" and the delivery date is displayed in a window labeled "Delivery date." When the customer touches an "OK" button provided at the lower right corner after confirming the delivery date, the order is placed on the basis of the estimation data displayed on the screen. The estimation data created by use of the terminal 7 are stored in a database together with estimation data created by the architectural material manufacturer.

In response to a request from the terminal 7 for inquiring about a stocked product, the stocked-product presenting program 22 searches the stocked-product data file 25 of the order placement and reception information database 19 and provides information regarding the inquired product. The stocked-product presenting program 22 performs processing for providing information as to presence/absence of stock, the quantity of stock, and delivery date. When the customer's terminal 7 inquires about a stock product by designating its product number, information as to presence/absence of stock, the quantity of stock, a delivery date, a photograph of the product, etc., are transmitted to the terminal 7. When the customer wishes to know the details of the product, the customer touches a predetermined chip or photograph on the screen of the terminal 7. In response thereto, the stocked-product presenting program 22 outputs on the screen detailed information such as specifications (size, shape, features) of the product, material for execution of work, etc.

Differences in texture peculiar to wood is a matter to which great attention must be paid in the course of dealing in wood architectural materials. This problem arises in the dealing of new building materials adapted for Japanese-style houses. For example, a flooring material of pine provides completely deferent textures, depending on the shade (red or white) of the color of the wood and the density (pitch) of growth rings. Therefore, products are managed while being classified on the basis of color and the pitch of growth rings. This enables an additional order of a material having a similar texture as that of the previously ordered material. Further, since color may vary among tree-growing districts, the relation between colors and tree-growing districts is determined in advance. Moreover, an alternative product to be used when stock is not present is determined in advance. This reduces claims stemming from differences in color, which would otherwise occur at the time of placing an additional order. The information of an alternative product is stored for some of the products stored in the stocked-product data file 25 of the order placement and reception information database 19. For example, as to alternative products for color and density of growth rings (hereinafter, simply called "color") selection, there is created in advance a file which includes a list of colors which can replace the basic color. However, in general, links are added between products which can replace each other.

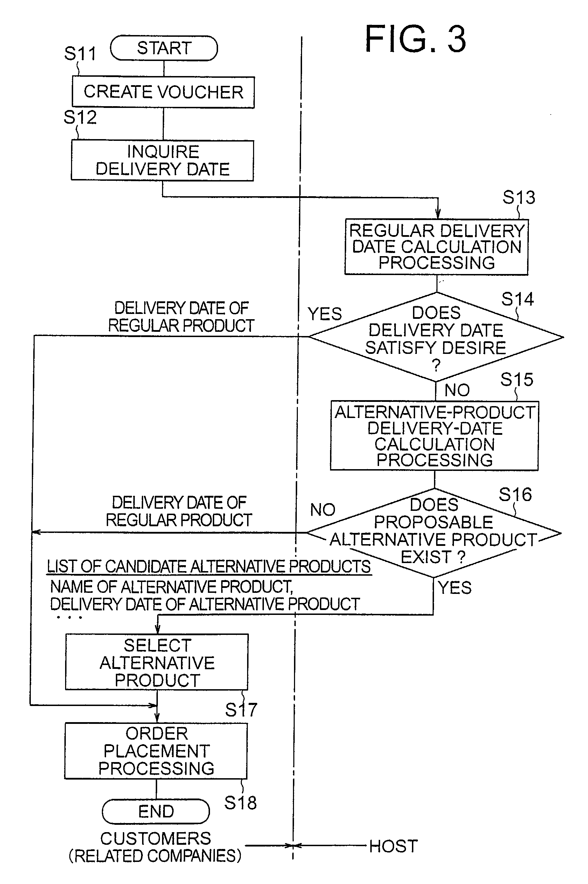

FIG. 3 shows a flowchart of processing for selecting an alternative product of a flooring material in terms of color. First, one of the terminal 7-1 to 7-n creates a voucher or an estimation sheet according to the customer's input (step S11), and inquires the host computer 1 whether a certain product can be delivered by a desired delivery date (step S12). The stocked-product presenting program 22 of the host computer 1 calculates a delivery date by a regular method (step S13), and investigates whether the calculated delivery date satisfy the user's desire (step S14). When the calculated delivery date satisfies the user's desire, the stocked-product presenting program 22 transmits to the customer's terminal 7 an answer indicating a delivery date for the case of a regular product being delivered. When the calculated delivery date does not satisfy the user's desire, the stocked-product presenting program 22 starts an alternative-product delivery-date calculation processing routine (step S15), and investigates whether an alternative product is present (step S16). When no alternative product to be proposed can be found, the above-described delivery date for the case of a regular product being delivered is presented. When a proper alternative product can be found, the stocked-product presenting program 22 creates an alternative-product candidate list including names of alternative products and their delivery dates and transmits it to the terminal 7. The customer's terminal 7 selects a proper alternative product from the alternative-product candidate list (step S17) and proceeds to order processing (step S18).

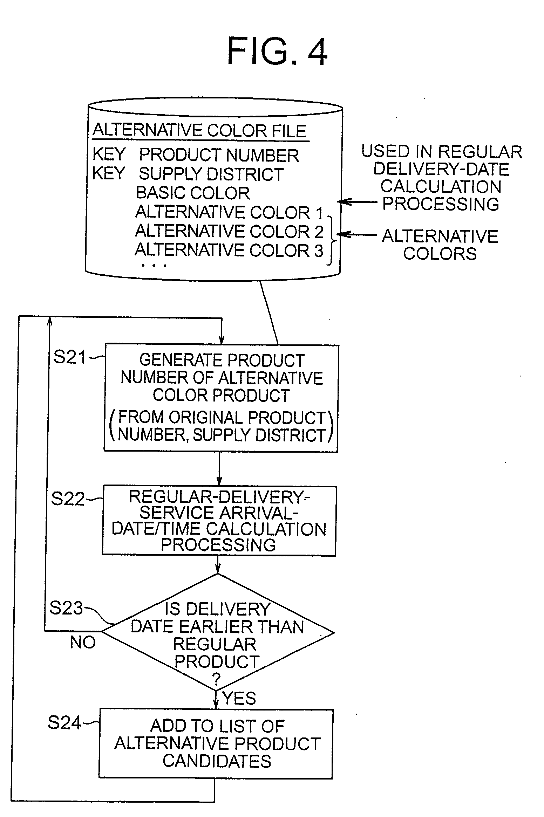

FIG. 4 is a detailed flowchart showing the alternative-product delivery-date calculation processing of FIG. 3 performed by the stocked-product presenting program 22. An alternative color file is created in advance. The alternative color file is designed to enable a customer to refer to a basic color and corresponding alternative colors #1, #2, #3, etc., by designating a product number and a supply district as keys. When, in the flowchart of FIG. 3, it is determined that a regular product having a basic color cannot satisfy the desired delivery date, the product number of a product of a first alternative color #1 is generated with reference to the illustrated alternative color file and on the basis of information regarding the product number and supply district of the regular product or original product number (step S21). Subsequently, the stocked-product presenting program 22 calculates a date and time at which the alternative product will arrive at a delivery site when the delivery is made by means of regular delivery (step S22), and investigates whether the calculated delivery date is earlier than the delivery date of the regular product (step S23). When the calculated delivery date is earlier than the delivery date of the regular product, the stocked-product presenting program 22 registers the product in the alternative-product candidate list (step S24). When the calculated delivery date is later than the delivery date of the regular product, the product number of a product of the next alternative color 2 is generated (step S21), and similarly, a date and time of arrival are calculated (step S23). Thus, the processing from step S21 to step S24 is repeated in a number equal to the number of alternative colors in the list to thereby complete the alternative-product candidate list.

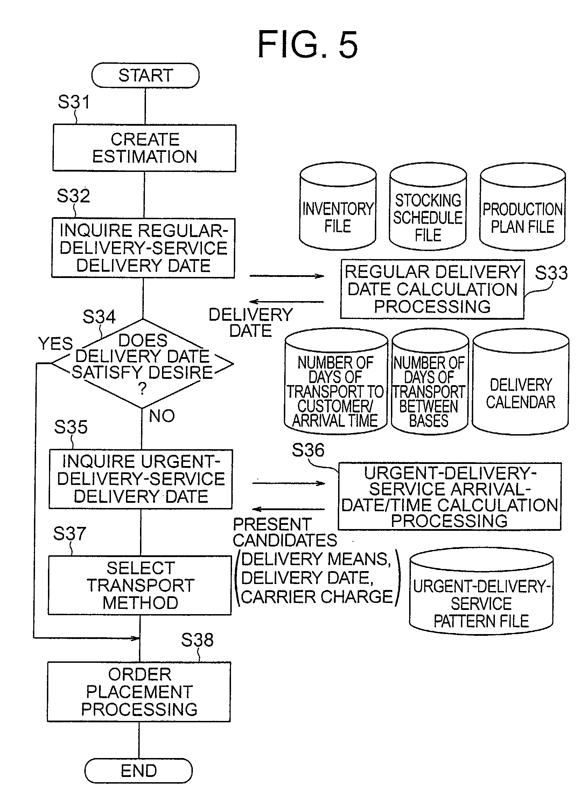

FIG. 5 shows a flowchart showing a delivery-date calculation processing performed by the stocked-product presenting program 22. In an urgent case, this processing takes into account a delivery method in order to clearly show an arrival time. In the field of architectural materials, which greatly depends on the existing product distribution channel, improving delivery efficiency is an important theme which greatly affects the process control of a construction site. In general, a product is relayed two or three times when it is delivered from an architectural material manufacturer to a building company (construction site), which is an end user. The product is first delivered from the architectural material manufacturer to a wholesaler, then from the wholesaler to a retail shop, and then from the retail shop to a construction site. Since the arrival time of each product is indefinite, a wholesaler may receive, after shipment of a product to a retail shop, another product to be sent to the retail shop. In such case, for the single product, the wholesaler must arrange delivery on that date or the day after that date. Alternatively, the wholesaler may wait for arrival of a single product, resulting in delayed delivery of the remaining products, which affects the process at the construction site. In view of the foregoing, upon receipt of an online order, not only the delivery date but also arrival time are presented.

When an order is received, the stocked-product presenting program 22 grasps a corresponding delivery destination, and selects and displays a predetermined delivery time on the basis of delivery routings. The delivery time is displayed in the unit of hours, which improves overall delivery efficiency of the product distribution channel. The stocked-product presenting program 22 creates the estimation sheet (step S31), and inquires about a delivery date for the case of a regular delivery service being used (step S32). After the regular-delivery-service delivery-date calculation processing (step S33), the stocked-product presenting program 22 investigates whether the customer is satisfied with the delivery date (step S34). When the customer is not satisfied with the delivery date, the customer's terminal 7 inquires about a delivery date for the case of an urgent delivery service (step S35), and, after urgent-delivery-service arrival-date/time calculation processing (step S36), selects a proper delivery method which will satisfy the customer in terms of arrival time (step S37), and proceeds to order processing (step S38). Therefore, in addition to regular-delivery-service delivery-date calculation processing, urgent-delivery-service arrival-date/time calculation processing is performed. In the regular-delivery-service delivery-date calculation processing, when a product is not in stock, a date on which the product is to be stocked is inferred by use of an inventory file, a stocking schedule file, and a product plan file (step S33). Further, a delivery date and time for the case of a regular delivery service being used is calculated on the basis of a delivery calendar for regular delivery, data representing the number of days required for transport between bases, the number of days required for transport from a base to the customer, and the time of arrival at the customer (step S33). In the urgent-delivery-service arrival-date/time calculation processing, available (or candidate) delivery means, their delivery dates, and their carrier charges are obtained from an urgent delivery pattern file in which delivery means and delivery routes to be used for urgent delivery are registered (step S36).

Referring back to FIG. 2, the estimation data browsing program 23 opens the estimation data file 26 stored in the order placement and reception information database 19 to parties relating to the product flow channel to which the customer relates, to thereby cope with a browsing request.

The delivery management program 24 transfers to the order placement data file 27 the estimation data file 26 having been subjected to order placement processing, and then manages execution of order placement and delivery, to thereby prevent occurrence of a mistake in relation to delivery such as failure to meet the delivery date.

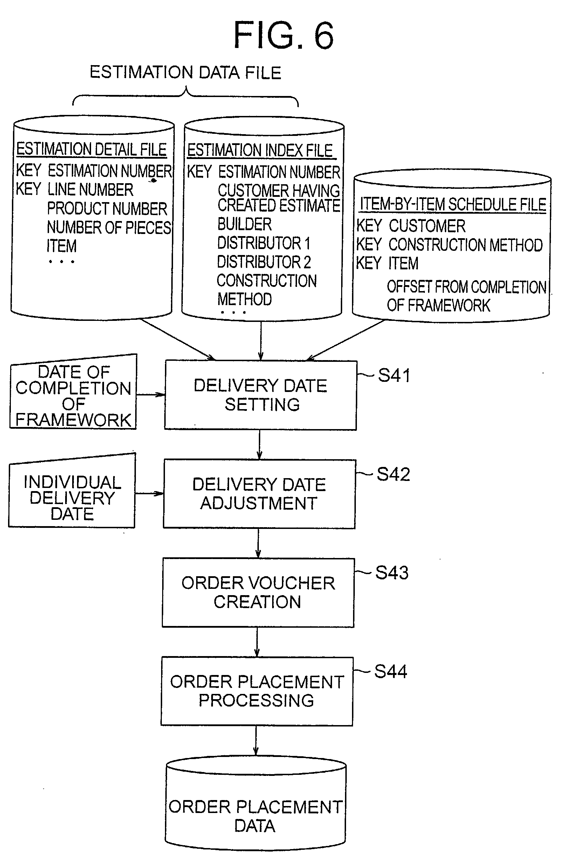

For such a purpose, as shown in FIG. 6, an estimation index file, an estimation detail file, and an item-by-item delivery schedule file are created, and estimation data are managed for each customer's terminal 7 and each execution method, while delivery items and delivery schedules are set thereto. For example, in the item-by-item delivery schedule file, there are stored data which indicate that, in a case where (1) AA building company employs a (2) conventional construction method, a first delivery for flooring materials and materials for steps is to be effected on the tenth day after completion of framework, and a second delivery for frame materials and fittings is to be effected on the seventeenth day after completion of framework. Once the above setting is made, for each construction site for which AA company is registered to use a conventional construction method, a delivery dates is set (or calculated) in such a manner that respective items are delivered on desired delivery dates in accordance with a schedule starting from completion of framework (step S41). At a construction site for which an order has been placed, management of the construction site and checking as to whether all necessary products have been ordered can be performed with reference to the contents of the estimation index file and the estimation detail file. Based on the result of the checking the delivery management program 24 adjusts the delivery date (step S42). After the adjustment the delivery management program 24 creates the order voucher (step S43), and then performs to order placement processing (step S44). Further, it is possible to provide a function for managing the order placement data while sorting the data for each construction site such as building lots for sale, and for enabling the customer's terminal 7 to browse a list of construction sites of a certain registered building firm.

Although the embodiment has been described with reference to an example case of orders for architectural materials being placed and accepted, the present invention is not limited thereto.

When the method and system for online order-placement and reception processing according to the present invention is employed, product order placement and reception processing can be performed efficiently, and quality of services is improved. Further, since a time required for order placement can be shortened, an earlier delivery date can be met. Moreover, since order placement and reception and delivery management are integrated, order placement and delivery can be checked reliably and easily, so that occurrence of mistakes can be reduced.

## Claims

1. A method to process an online order placement and reception in a system comprising a host computer receiving the order and a terminal placing the order, both being connected each other via a network, the method comprising:
storing stocked-product data and estimation data in an order placement and reception information database provided in the host computer;
referring from the terminal to the stocked-product data and the estimation data of parties relating to a relevant product distribution channel, being permitted by the host computer in response to an inquiry request from the terminal;
creating in the terminal a new estimation data based on the data referred, and transmitting the new estimation data to the host computer; and
storing the received new estimation data in the order placement and reception information database as an order placement data, and performing delivery management on the basis of the order placement data.

2. A method according to claim 1, wherein the host computer presents an estimation creation menu on a screen of the terminal, and
wherein the terminal selects an arbitrary input pattern from the presented estimation creation menu and successively inputs necessary data to thereby create estimation data in an interactive fashion.

3. A method according to claim 2, wherein the estimation creation menu includes an input pattern for free-planning which enables the terminal to freely set finish dimensions and machining conditions.

4. A method according to claim 2, wherein the host computer calculates a delivery date and estimated price on the basis of the estimation data input by the terminal and transmits the delivery date and estimated price to the terminal in real time.

5. A method according to claim 1, wherein the order placement data stored in the order placement and reception information database are managed in such a manner that the order placement data can be referred to while being sorted for each customer's terminal, each delivery area, and each delivery date.

6. A method according to claim 1, wherein on the basis of the order placement data stored in the order placement and reception information database, delivery items and delivery schedules are managed for each customer's terminal, each execution method and each construction site.

7. A system to process an online order placement and reception comprising:
a host computer receiving the order; and
a terminal placing the order being connected with the host computer via a network,
wherein the host computer further comprises:
an order placement and reception information database to store stocked-product data and estimation data;
estimation order means for enabling, in response to an inquiry request from the terminal, the terminal to refer to the stocked-product data and estimation data of parties relating to a relevant product distribution channel and assisting the terminal to creates estimation data; and
delivery management means for storing in the order placement and reception information database the estimation data created by the terminal and uses the estimation data as order placement data to manage delivery.

8. A system according to claim 7, wherein the estimation order means has a wizard function to present an estimation creation menu on a screen of the terminal, forcing the terminal to select an arbitrary input pattern from the presented estimation creation menu and successively input necessary data to thereby create estimation data.

9. A system according to claim 8, wherein the estimation creation menu includes an input pattern for free-planning which enables the terminal to freely set finish dimensions and machining conditions.

10. A system according to claim 8, wherein the host computer calculates a delivery date and estimated price on the basis of the estimation data input by the terminal and transmits the delivery date and estimated price to the terminal in real time.

11. A system according to claim 7, wherein the order placement data stored in the order placement and reception information database are managed in such a manner that the order placement data can be referred to while being sorted for each customer's terminal, each delivery area and each delivery date.

12. A system according to claim 7, wherein on the basis of the order placement data stored in the order placement and reception information database, the delivery management means manages delivery items and delivery schedules for each customer's terminal, each execution method and each construction site.
